# EUROPEAN PATENT APPLICATION

(11) **EP 4 564 831 A1**
(43) Date of publication of application: **04.06.2025**
(21) Application number: 23845599.2
(22) Date of filing: 26.07.2023
(51) Int. Cl.: H04N 21/44, H04N 21/4402, H04N 5/262, H04N 7/01, H04N 7/15

(54) **MULTIMEDIA DATA TRANSMISSION METHOD AND APPARATUS, AND ELECTRONIC DEVICE AND STORAGE MEDIUM**

(30) Priority: 29.07.2022 CN 202210910775
(71) Applicant: Beijing Zitiao Network Technology Co., Ltd., Beijing 100190 (CN)
(72) Inventor: ZHANG, Yi, Beijing 100028 (CN)
(74) Representative: Dentons UK and Middle East LLP
(86) International application number: PCT/CN2023/109364
(87) International publication number: WO 2024/022391

(57) **Abstract**

Embodiments of the disclosure provide method, apparatus, electronic device and storage medium for multimedia data transmission. The method includes: in response to a data transmission request, obtaining original multimedia data to be transmitted; in response to a preset special effect processing condition being met, determining a target special effect processing mode of the original multimedia data based on a preset special effect processing mode, wherein the preset special effect processing mode at least comprises a central processing unit mode and a graphics processor processing mode; and performing a special effect processing on the original multimedia data based on the target special effect processing mode to obtain target transmission multimedia data.

## Description

This application claims priority to Chinese Patent Application No. 202210910775.7, filed on July 29, 2022 and before the Chinese Patent Office, the entire content of which is incorporated herein by reference.

### FIELD

Embodiments of the disclosure relate to the technical field of data processing, in particular to a method, apparatus, electronic device and storage medium for multimedia data transmission.

### BACKGROUND

Multimedia data is one of important carriers for information propagation, which is favored by user due to its abundant, intuitive and vivid characteristics. With the continuous development of intelligent devices, users have increasingly higher requirements on the quality of multimedia data. Taking video as an example, in many scenarios, a video is required to have a high frame rate and a high resolution to ensure a viewing effect.

In a video transmission scenario, in order to enrich the display effect of the video, a special effect may also be applied to the video. A related special effect processing manner includes performing video transmission through a central processing unit (CPU), and performing the special effect processing on a video through a graphics processing unit (GPU). In this way, when a special effect processing is performed on a video with a high frame rate and a high resolution, a case in which CPU performance consumption is high may occur. Furthermore, a problem of device heating up or fan spinning caused by high CPU occupation is also relatively prominent, which affects user experience.

### SUMMARY

The disclosure provides a method, apparatus, electronic device and storage medium for multimedia data transmission, so as to achieve the technical effect of improving the data transmission efficiency, reducing the performance consumption of the processor and increasing the diversity of the special effect processing.

According to a first aspect, an embodiment of the present disclosure provides a method of multimedia data transmission, where the method includes:
in response to a data transmission request, obtaining original multimedia data to be transmitted;
in response to a preset special effect processing condition being met, determining a target special effect processing mode of the original multimedia data based on a preset special effect processing mode, wherein the preset special effect processing mode at least comprises a central processing unit mode and a graphics processor processing mode; and
performing a special effect processing on the original multimedia data based on the target special effect processing mode to obtain target transmission multimedia data.

According to a second aspect, an embodiment of the present disclosure further provides a apparatus for multimedia data transmission, where the apparatus includes:
an original data obtaining module configured to in response to a data transmission request, obtain original multimedia data to be transmitted;
a processing mode determining module configured to determine, in response to a preset special effect processing condition being met, a target special effect processing mode of the original multimedia data based on a preset special effect processing mode, wherein the preset special effect processing mode at least comprises a central processing unit mode and a graphics processor processing mode; and
a special effect processing module is configured to perform a special effect processing on the original multimedia data based on the special effect processing mode to obtain target transmission multimedia data.

According to a third aspect, an embodiment of the present disclosure further provides an electronic device, including:
at least one processor; and
the storage device configured to store at least one program, which when executed by the at least one processor, implements the method of multimedia data transmission according to any of the embodiments of the present disclosure.

According to a fourth aspect, an embodiment of the present disclosure further provides a storage medium including computer executable instructions, where the computer executable instructions, when executed by a computer processor, perform the method of multimedia data transmission according to any of the embodiments of the present disclosure.

### BRIEF DESCRIPTION OF DRAWINGS

FIG. 1 is a schematic flowchart of a method of multimedia data transmission according to an embodiment of the present disclosure;
FIG. 2 is a schematic flowchart of a method of multimedia data transmission according to an embodiment of the present disclosure;
FIG. 3 is a schematic flowchart of a method of multimedia data transmission according to an embodiment of the present disclosure;
FIG. 4 is a schematic flowchart of a method of multimedia data transmission according to an embodiment of the present disclosure;
FIG. 5 is a schematic diagram of a scenario of an optional example of a method of multimedia data transmission according to an embodiment of the present disclosure;
FIG. 6 is a schematic diagram of a scenario of another optional example of a method of multimedia data transmission according to an embodiment of the present disclosure;
FIG. 7 is a schematic structural diagram of an apparatus for multimedia data transmission according to an embodiment of the present disclosure; and
FIG. 8 is a schematic structural diagram of an electronic device according to an embodiment of the present disclosure.

### DETAILED DESCRIPTION

As used herein, the term "comprising" and deformation thereof are open-ended, i.e., "including but not limited to". The term "based on" is "based at least in part on". The term "one embodiment" means "at least one embodiment"; the term "another embodiment" means "at least one further embodiment"; the term "some embodiments" means "at least some embodiments". The relevant definition of other terms will be given below.

It should be noted that concept concepts such as "first" and "second" mentioned in this disclosure are merely used to distinguish different apparatuses, modules, or units, and are not intended to limit the order of functions performed by the apparatuses, modules, or units or the mutual dependency relationship.

It should be noted that the modification of "a" and "a plurality" mentioned in this disclosure is illustrative and not limiting, and those skilled in the art should understand that "at least one" should be understood unless the context clearly indicates otherwise.

The names of messages or information interaction between multiple devices in the embodiments of the present disclosure are for illustration only, and are not intended to limit the scope of these messages or information.

It can be understood that, before the technical solutions disclosed in the embodiments of the present disclosure are used, the types of personal information related to the present disclosure, the usage scope, the usage scenario and the like should be notified to the user in an appropriate manner according to the relevant laws and regulations and obtain the authorization of the user.

For example, when an active request of the user is received, prompt information is sent to the user to explicitly prompt the user, and the operation requested by the user will need to acquire and use the personal information of the user. Therefore, the user can autonomously select whether to provide personal information to software or hardware executing the operation of the technical solution of the present disclosure according to the prompt information.

As an optional but non-limiting implementation, in response to receiving the active request of the user, the manner of sending the prompt information to the user may be, for example, a pop-up window, and the prompt prompt information may be presented in a text manner in the pop-up window. In addition, the pop-up window may further carry a selection control for the user to select "agree" or "disagree" to provide personal information to the electronic device.

It may be understood that the foregoing notification and obtaining a user authorization process is merely illustrative, and does not constitute a limitation on implementations of the present disclosure, and other manners of meeting related laws and regulations may also be applied to implementations of the present disclosure.

It may be understood that the data involved in the technical solution (including but not limited to the data itself, the acquisition or use of the data) should follow the requirements of the corresponding laws and regulations and related regulations.

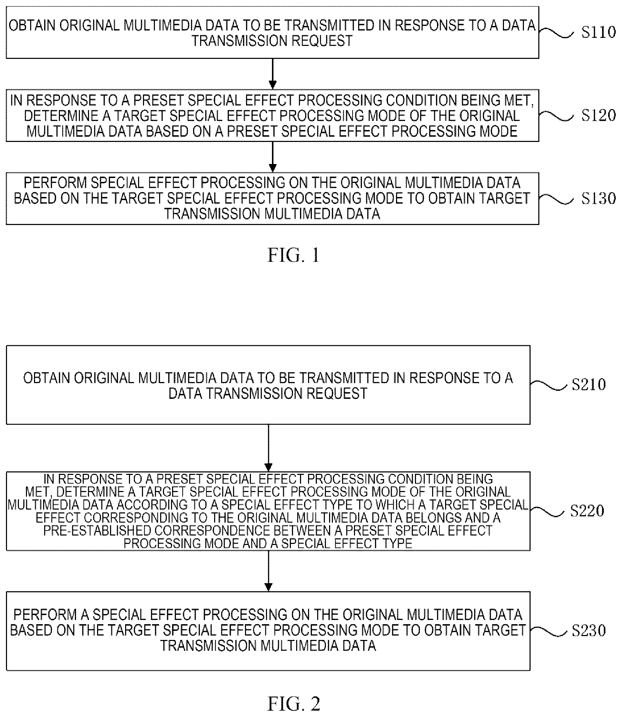

FIG. 1 is a schematic flowchart of a method of multimedia data transmission according to an embodiment of the present disclosure.

As shown in FIG. 1, the method includes the following.

S110, obtain original multimedia data to be transmitted in response to a data transmission request.

The data transmission request may be understood as a request for starting transmission of the data to be transmitted. There may be a plurality of generation manners of the data transmission request. For example, the data transmission request may be generated when a preset transmission request control for initiating a data transmission request is received, or generated when a preset trigger event for triggering data transmission is detected, or generated when preset sound information or gesture information is detected. The trigger event may be set according to an actual situation, which is not limited herein, for example, at least one of an event that a current time reaches a preset time point, to-be-transmitted data is target data, and an application whose data transmission is enabled. It may be understood that the generation manner of the data transmission request may be set according to an application scenario, which is not limited herein.

The original multimedia data may be understood as multimedia data not processed by special effects. For example, the original multimedia data may be multimedia data to be transmitted in a preset format collect on a data acquisition device for an application scenario. There may be a plurality of forms of the original multimedia data. For example, the original multimedia data may include at least one of original image data, original video data, and original audio data. In different application scenarios, the data forms of the original multimedia data may be different. For example, in a video conference scenario, the original multimedia data may be original video data in a preset format collect for a video conference; in an audio call process, the original multimedia data may be original audio data in a preset format collect for a call object.

In a video conference scenario, optionally, the data transmission request may be generated based on a received conference start triggering operation for a video conference. For example, it may be generated when the operation of clicking the start button of the video conference is received. Optionally, the obtaining, in response to a data transmission request, original multimedia data to be transmitted may include: in response to a conference start triggering operation for a video conference, collect original video data to be transmitted in a first encoding format based on a video acquisition device, where the first coding format includes at least a pixel format separately represented by a luma parameter and a chroma parameter.

The video collection device may be understood as a device having a function of collect the original video data. For example, it may be a lens or a video distributor disposed on a device equipped with a video conference client. The first encoding format may be understood as a format of original video data collect by the video collection device. In this embodiment of the present disclosure, the first encoding format may be set according to actual requirements, which is not limited herein. It may be understood that the original video data to be transmitted in the first encoding format is collect, which is beneficial to the transmission and processing of the original video data. Optionally, the first encoding format includes at least a pixel format separately represented by a luma parameter and a chroma parameter. The luma parameter may be understood as a parameter capable of determining a luma degree of the original video data. The chromaticity parameter may be understood as a parameter capable of determining the hue and saturation of the original video data color.

S120, in response to a preset special effect processing condition being met, determine a target special effect processing mode of the original multimedia data based on a preset special effect processing mode.

The preset special effect processing condition may be understood as a preset condition for determining whether a special effect processing needs to be performed on the original multimedia data. In the embodiments of the present disclosure, the preset special effect processing condition may be preset according to an application scenario, which is not limited herein.

Optionally, the preset special effect processing condition includes at least one of the following conditions:
detecting a preset special effect flag bit;
detecting that the data transmission request carries a special effect processing request for the original multimedia data; or
receiving a special effect triggering operation acting on a preset special effect processing control, where the special effect triggering operation includes at least one of a special effect enabling operation, a special effect deleting operation, and a special effect adjusting operation.

For example, the value of the flag bit may be set to a value that identifies that the special effect processing function is in an on state. In the embodiments of the present disclosure, there may be a plurality of representation forms of the special effect flag bit, and the representation form of the special effect flag bit is preset according to actual needs, which is not limited herein. For example, it may be represented by a numerical identifier, a letter or a word.

The special effect processing request may be understood as a request for starting special effect processing for the original multimedia data. In an embodiment of the present disclosure, the special effect processing request may be initiated based on the data transmission request. For example, the original multimedia data needs to be specially processed by default before the original multimedia data transmission, that is, the data transmission request carries by fault a special effect processing request preset for the original multimedia data. Optionally, whether the data transmission request carries a special effect processing request for the original multimedia data is determined according to the data transmission request. For example, a different transmission request control for initiating a data transmission request may be preset, wherein the at least one transmission request control is configured to initiate a data transmission request carrying a special effect processing request for performing special effect processing on the original multimedia data. Further, whether the data transmission request carries the special effect processing request for the original multimedia data may be determined by triggering which transmission request control.

Optionally, the data transmission request interface may be provided with an option for selecting whether to perform special effect processing on the original multimedia data, or may be provided with a data transmission start control. For example, the data transmission request carries a special effect processing request preset for the original multimedia data. Aternatively, before the data transmission request is sent, the special effect processing request has been sent. In other words, before the data transmission starts, the option that needs to perform special effect processing on the original multimedia data has been selected. Further, when a transmission trigger operation for the data transmission start control is received, the special effect processing request is initiated with the data transmission request. For example, before the data transmission starts, the special effect processing option is selected; and the data transmission start control is clicked, and the special effect processing is performed on the original multimedia data according to the data transmission request.

The special effect processing control may be understood as a packaging of special effect processing functions. In the embodiment of the present disclosure, the special effect triggering operation may be applied to the special effect processing control to trigger the operation of performing special effect processing on the original multimedia data. For example, after the video conference starts, the special effect processing is performed on the original multimedia data via a special effect enabling operation, a special effect deleting operation, an special effect adjusting operation, and so on, which are applied to a preset special effect processing control.

It may be understood that there may be several manners of special effect processing. For example, according to different processing object, a background special effect and a main body special effect may be classified. The background special effect may include background replacement and background blurring. The main body special effect may include a special effect corresponding to different main body parts, for example, may be at least one of special effects such as body blurring, skin smoothing, eye enlargement and face slimming, dynamic decoration or virtual face mask. Optionally, there may be at least one special effect processing control. For example, a special effect processing control may be set for each special effect processing, so that the user selects the special effect processing mode by triggering different special effect processing controls. Further, in the case where there are several special effect processing modes, a combined application of different special effect processing modes may also be implemented.

The preset special effect processing mode may be understood as a preset selectable special effect processing mode. The preset special effect processing mode may be preset according to requirements, which is not limited herein. In the embodiments of the present disclosure, there may be multiple preset special effect processing modes, and the special effect processing modes corresponding to different special effect processing requests may be the same or different. The preset special effect processing modes include at least a central processing unit mode and a graphics processor processing mode.

The target special effect processing mode may be understood as a special effect processing mode to be used for the original multimedia data determined by the special effect processing request. It may be understood that the target special effect processing mode may be one of the preset special effect processing modes. The target special effect processing mode may be a special effect processing mode that is more suitable for special effect processing on the original multimedia data determined in response to the special effect processing request. Optionally, the target special effect processing mode may be a central processing unit mode or a graphics processor processing mode.

It should be noted that the special effect processing operation to be performed on the to-be-processed image may be separately set for each special effect in each special effect processing mode, where the special effect processing operation corresponding to each special effect may refer to related technologies, and details are not described herein again.

S130, perform special effect processing on the original multimedia data based on the target special effect processing mode to obtain target transmission multimedia data.

The target transmission multimedia data may be understood as multimedia data obtained after special effect processing is performed on the original multimedia data.

For example, for the collected original multimedia data, a special effect processing is performed on the original multimedia data based on the determined target special effect processing mode. Thus, the special effect processed multimedia data is obtained.

According to the technical scheme of the embodiment of the disclosure, the original multimedia data to be transmitted is obtained in response to the data transmission request, and the original multimedia data can be automatically acquired before the data is transmitted. In a case that a preset special effect processing condition is met, a target special effect processing mode of the original multimedia data is determined according to a preset special effect processing mode, where the preset special effect processing mode includes at least a central processing unit mode and a graphics processor processing mode; a special effect processing may be performed on the original multimedia data in a proper mode selected from the central processing unit mode and the graphics processor processing mode, and compared with a manner of using a graphics processor to perform special effect processing, an adaptability of the special effect processing mode to the scene requirement is higher. For example, with the special effect processing performed on the original multimedia data based on the target special effect processing mode, the target transmission multimedia data is obtained, so that the technical problem of heating or fan rotation caused by high CPU performance consumption in the related art is solved, the data transmission efficiency is improved, the performance consumption of the processor is effectively reduced, the technical effect of diversity of the special effect processing mode is increased, and the use experience of the user is improved.

FIG. 2 is a schematic flowchart of a method of multimedia data transmission according to an embodiment of the present disclosure. This embodiment refines the determination of the target special effect processing mode of the original multimedia data based on the preset special effect processing mode in the above embodiments.

As shown in FIG. 2, the method in this embodiment may include the following steps.

S210, obtain original multimedia data to be transmitted in response to a data transmission request.

S220, in response to a preset special effect processing condition being met, determine a target special effect processing mode of the original multimedia data according to a special effect type to which a target special effect corresponding to the original multimedia data belongs and a pre-established correspondence between a preset special effect processing mode and a special effect type.

The target special effect may be understood as a special effect to be added to the original multimedia data. In the embodiments of the present disclosure, the type of the target special effect may be preset in the system, or determined according to an input or selection operation for the special effect, which is not limited herein. It may be understood that the target special effect may be at least one special effect. For example, the target special effect may include at least one of background blur, background replacement, large eye lean face, facial skin, dynamic decoration, or face virtual head set.

The special effect type may be understood as a division of the types of the target special effect. In the embodiment of the present disclosure, the special effect type may be preset in the system, which is not limited herein. For example, the special effect type may be a background replacement type, a face beauty type, a 3D special effect type, or the like. It may be understood that different preset special effect processing modes may process the special effects of the same special effect type and the occupied system performance may be the same or different.

In the embodiments of the present disclosure, special effects of different special effect types may be processed through different special effect processing modes through a pre-established correspondance between the preset special effect processing mode and the special effect type, to improve the performance of the special effect processing.

Optionally, before the determining the target special effect processing mode of the original multimedia data based on a special effect type to which the target special effect corresponding to the original multimedia data belongs and a pre-established correspondance between the preset special effect processing mode and the special effect type, the method further comprises: performing a special effect processing test on the special effect of each special effect type through a central processing unit and a graphics processor, and determining a processing performance evaluation result of the special effect of each special effect type by the central processing unit and the graphics processor based on a predetermined performance evaluation index; and constructing a correspondence between each special effect type and the preset special effect processing mode based on the processing performance evaluation result of the special effect of each special effect type determined by the central processor and the graphics processor.

It may be understood that the central processing unit mode mainly performs the special effect processing on the original multimedia data by using the central processing unit; and the graphics processor processing mode mainly performs the special effect processing on the original multimedia data by using a graphics processor.

The special effect processing test may be understood as a performance test of a preset special effect processing mode applicable to a special effect of each special effect type. For example, the special effect processing may be separately performed on the special effect of each special effect type by using the central processing unit and the graphics processor, to determine the target special effect processing mode applicable to the special effect of each special effect type.

The predetermined performance evaluation index may be understood as an index of the special effect processing performance when the special effect processing test is performed in the special effect processing test. Optionally, the predetermined performance evaluation index may be a special effect processing speed or a processor heating condition. It may be understood that, the faster the special effect processing speed is, the less the processor is heating, the better the performance of the special effect processing on the special effect of the special effect type by the processor corresponding to the corresponding preset special effect processing mode.

The processing performance evaluation result may be understood as a processing performance evaluation result of the determined special effect of the central processing unit and the graphics processor for each of the special effect types. For example, the processing performance evaluation result may be that the special effect processing performance of the special effect type is better through the central processing unit or the special effect processing performance of the special effect type is better through the graphics processor.

For example, a correspondence between each special effect type and a preset special effect processing mode is constructed according to the processing performance evaluation results of the central processor and of the graphics processor for the special effect of each special effect type.

For example, the pre-established correspondence between the preset special effect processing mode and the special effect type may be as shown in Table 1:

**Table 1**

| Target Specificity | Special Effect Types | Preset special effect processing mode |
|---|---|---|
| Background blur | Background replacement | Central Processing Unit Mode |
| Background replacement | | |
| Eye enlargement and face slimming | Face beautification | |
| Skin smoothing | | |
| Dynamic decoration | 3D special effect | Graphics Processor Processing Mode |
| Face virtual mask | | |

It may be understood that the performance and the device parameter of the central processing unit and the graphics processor are related to the special effect processing algorithm, and the above is merely an example of a correspondence between the preset special effect processing modes and the special effect types, without suggesting any limitation.

S230, perform a special effect processing on the original multimedia data based on the target special effect processing mode to obtain target transmission multimedia data.

According to the technical scheme of the embodiment of the disclosure, the special effect processing test is carried out on the special effect of each special effect type through the central processing unit and the graphics processor, and the processing performance evaluation result of the central processing unit and the graphics processor for a special effect of each special effect type is determined based on the predetermined performance evaluation index; the special effect processing test is carried out on the special effect of each special effect type through different processors, so that the preset special effect processing mode suitable for the special effect of each special effect type is determined. For example, a correspondence between each special effect type and a preset special effect processing mode is constructed according to the processing performance evaluation result of the central processing unit and the graphics processor for the special effect of each special effect type. Thus, the target special effect processing mode of the original multimedia data can be conveniently and quickly determined according to the corresponding correspondence, leading to more accurate determination of the target special effect processing mode, and improved special effect processing performance of the original multimedia data.

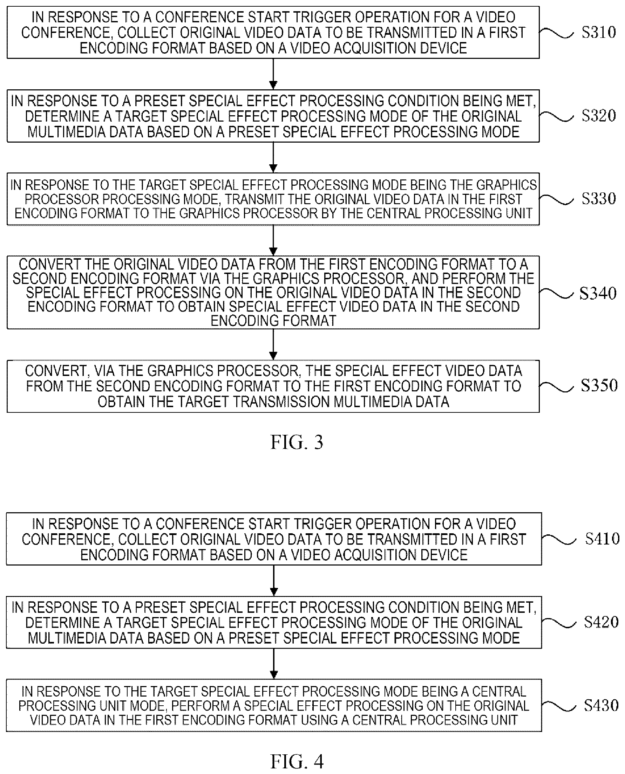

FIG. 3 is a schematic flowchart of a method of multimedia data transmission according to an embodiment of the present disclosure. This embodiment refines the special effect processing which is performed on the original multimedia data based on the target special effect processing mode in the above embodiments. In this embodiment, the original multimedia data is used as an example for description.

As shown in FIG. 3, the method in this embodiment may include the following steps.

S310, in response to a conference start trigger operation for a video conference, collect original video data to be transmitted in a first encoding format based on a video acquisition device, where the first coding format at least includes a pixel format represented by a luma parameter and a chroma parameter separately.

S320, in response to a preset special effect processing condition being met, determine a target special effect processing mode of the original multimedia data based on a preset special effect processing mode, where the preset special effect processing mode includes at least a central processing unit mode and a graphics processor processing mode.

S330, in response to the target special effect processing mode being the graphics processor processing mode, transmit the original video data in the first encoding format to the graphics processor by the central processing unit.

For example, according to the pre-established correspondance between the preset special effect processing mode and the special effect type, when the preset special effect processing mode corresponding to the special effect type of the target special effect is the graphics processor processing mode, the original video data in the first encoding format collected by the video collecting device is transmitted to the graphics processor through the central processing unit. For example, the graphics processor performs special effect processing corresponding to the target special effect on the original video data. It can be understood that, if the computing capability of the graphics processor parallel computing relatively high, parallel processing can be performed on each pixel during special effect processing, thereby improving efficiency of special effect processing. In this embodiment of the present disclosure, for example, the graphics processor processing mode may handle complex special effects, such as a special effect of the 3D special effect type. For example, a face virtual headband or a dynamic decorative lamp is added to the original video data.

Typically, the first encoding format is a YUV format. When the video is encoded, the redundant information can be greatly removed by using the YUV format, so that the data size is reduced, so that the data transmission occupies less bandwidth.

S340, convert the original video data from the first encoding format to a second encoding format via the graphics processor, and perform the special effect processing on the original video data in the second encoding format to obtain special effect video data in the second encoding format.

For example, the original video data in the first encoding format transmitted by the central processing unit is received, and the original video data is first converted from the first encoding format to the second encoding format through the graphics processor. Performing special effect processing on the original video data in the second encoding format to obtain special effect video data in a second encoding format, where the second encoding format at least includes a color standard and a pixel format represented by a pixel channel. It may be understood that, in the case where the target special effect processing mode is the graphics processor processing mode, compared with the original video data in the first encoding format, the original video data in the second encoding format is processed through the graphics processor with better performance.

The second encoding format may be an RGBA format. It is understood that the RGBA is a color space that represents Red, Green, Blue and Alpha. The advantage of this arrangement is that the data loss of the original video data can be reduced, and the effect of special effect processing is fully ensured.

S350, convert, via the graphics processor, the special effect video data from the second encoding format to the first encoding format to obtain the target transmission multimedia data.

It may be understood that the special effect video data is data in a second encoding format after the special effect processing of the graphics processor. For example, after performing special effect processing on the original video data in the second encoding format to obtain the special effect video data in a second encoding format, the special effect video data is converted from the second encoding format to the first encoding format through the graphics processor, resulting in the target transmission multimedia data. It may be understood that the target transmission multimedia data may be considered as data in a first encoding format after the special effect processing.

It should be noted that the first encoding format may be understood as a format matching the central processing unit, and is intended to ensure that the encoding format of the transmission performance can be improved when data transmission is performed. The second encoding format may be understood as a matching graphics processor, which is beneficial to the graphics processor to efficiently and efficiently process the encoding format of the special effect video data.

Optionally, after the obtaining the target transmission multimedia data, the method further includes: transmitting the target transmission multimedia data to the central processing unit, and pushing the target transmission multimedia data to a target server through the central processing unit.

For example, after the target transmission multimedia data is obtained, the target transmission multimedia data is transmitted to the central processing unit. For example, the target transmission multimedia data is pushed to the target server via the central processing unit, so that the target special effect is displayed in the video conference display. It may be understood that, in the case where the target special effect processing mode is a graphics processor processing mode, data may be transmitted through the central processing unit, and may be performed by a special effect processing using the graphics processor.

According to the technical solution of the embodiments of the present disclosure, when the target special effect processing mode is the graphics processor processing mode, the original video data in the first encoding format is first transmitted to the graphics processor through the central processing unit. For example, the original video data is converted from the first encoding format to the second encoding format through the graphics processor, and a special effect processing is performed on the original video data in the second encoding format to obtain special effect video data in the second encoding format, after the original video data is converted from the first encoding format to the second encoding format, a special effect processing is performed to improve the special effect processing efficiency of the graphics processor, for instance, the special effect video data is converted into the first encoding format from the second encoding format through the graphics processor to obtain the target transmission multimedia data, the data after the special effect processing is changed into the format through the graphics processor, and then transmitted to the central processing unit, so that energy consumption can be reduced. Transmitting the target transmission multimedia data to the central processing unit, and pushing the target transmission multimedia data to a target server via the central processing unit. By processing the applicable special effect through the graphics processor, the increased diversity of the video conference special effect is achieved and the special effect processing efficiency is improved.

FIG. 4 is a schematic flowchart of a method of multimedia data transmission according to an embodiment of the present disclosure. This embodiment refines the special effect processing which is performed on the original multimedia data based on the target special effect processing mode in the above embodiments. Optionally, the original multimedia data includes original video data.

As shown in FIG. 4, the method in this embodiment may include the following steps.

S410, in response to a conference start trigger operation for a video conference, collect original video data to be transmitted in a first encoding format based on a video acquisition device, where the first coding format at least includes a pixel format represented by a luma parameter and a chroma parameter separately.

S420, in response to a preset special effect processing condition being met, determine a target special effect processing mode of the original multimedia data based on a preset special effect processing mode, where the preset special effect processing mode includes at least a central processing unit mode and a graphics processor processing mode.

S430, in response to the target special effect processing mode being a central processing unit mode, perform a special effect processing on the original video data in the first encoding format using a central processing unit.

For example, according to a pre-established correspondence between a preset special effect processing mode and a special effect type, when the preset special effect processing mode corresponding to the special effect type of the target special effect is the central processing unit mode, the special effect processing is performed on the original video data in the first encoding format by using the central processing unit. It may be understood that, for a relatively strong single-core operation capability of the central processing unit, in an embodiment of the present disclosure, a special effect of a background replacement type or a facial beauty type may be processed through the central processing unit mode. For example, eye enlargement and face slimming, facial smoothing, dynamic decoration or virtual face mask, etc.

Optionally, the performing special effect processing on the original video data in the first encoding format by using the central processing unit includes: determining, for each frame of image to be processed in the original video data, a target processing parameter from a luma parameter and a chroma parameter of the image to be processed based on the special effect type of the target special effect corresponding to the original video data; and performing the special effect processing on the target processing parameter to obtain the target transmission multimedia data.

In this embodiment of the present disclosure, when the special effect processing is performed on the original video data according to the target special effect, at least one related parameter in the to-be-processed image coding format may be processed. It may be understood that different types of special effects may be the same or may be different.

The target processing parameter may be understood as a parameter that needs to be processed in the to-be-processed image coding format when the special effect processing is performed on the original video data according to the target special effect. It may be understood that the determination of the target processing parameter may provide a basis for reducing the complexity of special effect processing.

Taking the image to be processed in the YUV format as an example, there may be a case where only the luma parameter Y needs to be processed, and there may be another case where only the chroma parameter UV needs to be processed. Of course, it is also possible to process all the YUV parameters.

For example, for each frame of image to be processed in the original video data, the target processing parameter of the image to be processed is determined according to the special effect type of the target special effect corresponding to the original video data, and the special effect processing is performed on the target processing parameter to obtain the target transmission multimedia data.

The central processing unit typically processes the original video data serially for applying special effects. In the embodiments of the present disclosure, in order to improve the effect processing efficiency, the central processor may perform the special effect processing on the original video data in a parallel manner.

Optionally, the performing special effect processing on the original video data in the first encoding format by using the central processing unit includes: for each frame of to-be-processed image in the original video data, performing the special effect processing on each pixel of the to-be-processed image by using a parallel instruction set in the central processing unit.

In the embodiment of the present disclosure, the special effect processing is performed on each pixel of the to-be-processed image by using the parallel instruction set in the central processing unit, so that the speed of special effect processing on the target processing parameter can be accelerated, and the special effect processing efficiency is improved.

Optionally, when the target special effect is a plurality of special effects, the special effect processing is performed by using the same preset special effect processing mode, and compared with performing special effect processing by using a plurality of preset special effect processing modes, performance consumption may be reduced. Therefore, the target special effect processing mode of the original multimedia data is determined according to the preset special effect processing mode, for example, the preset special effect processing mode corresponding to each special effect may be determined separately, and then the target special effect processing mode of the original multimedia data is determined according to the preset special effect processing mode corresponding to each special effect. For example, the preset special effect processing mode with the highest priority in the preset special effect processing modes corresponding to each special effect may be used as the target special effect processing mode of the original multimedia data. Altemativley, the total number of preset special effect processing modes corresponding to each special effect may be counted, and the preset special effect processing mode with the largest number maty be determined as the target special effect processing mode of the original multimedia data.

According to the technical scheme of the embodiment of the present disclosure, under the condition that the target special effect processing mode is the central processing unit mode, for each to-be-processed frame of image in the original video data, special effect processing is carried out on each pixel point of the original video data in the first encoding format by using a parallel instruction set in the central processing unit, so that the technical effect of reducing the performance consumption of data transmission and improving the special effect processing efficiency is achieved.

In the related solutions, all special effect processings are processed by the GPU based on the image in the RGBA format, which has the advantage that the GPU processes the high-resolution image more efficiently, and at the same time supports almost all the effect effects from simple to complex. The disadvantage is that the conference push needs to be the CPU data, and the video data before and after processing needs to increase the format conversion and the CPU to GPU data copy, and the CPU performance is relatively high under the video requirements of high frame rate and high resolution. In a common office machine environment, the problem of heating or fan rotation caused by high CPU occupation of the video conference is relatively prominent.

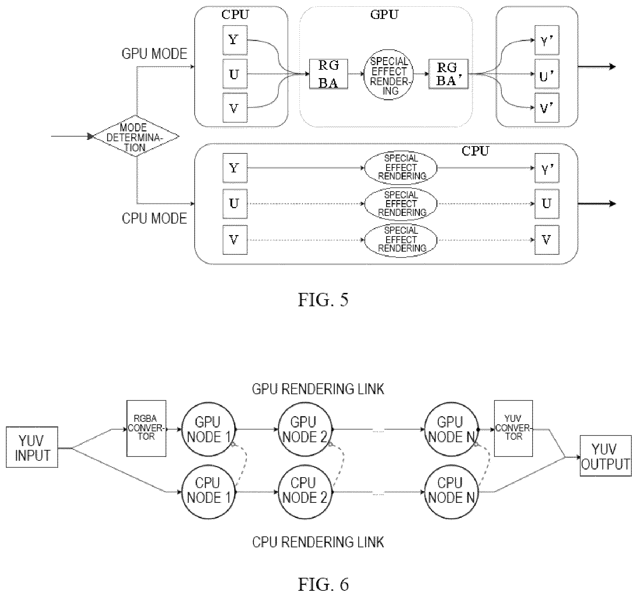

FIG. 5 is a schematic diagram of a scenario of an optional example of a method of multimedia data transmission according to an embodiment of the present disclosure, and FIG. 6 is a schematic diagram of a scenario of another optional example of another method of multimedia data transmission according to an embodiment of the present disclosure. The central processing unit is represented by a CPU, the graphics processor is represented by a GPU, the first encoding format is represented by YUV, and the second encoding format is represented by RGBA.

In this embodiment, a video conference scenario is used as an example to describe a method of multimedia data transmission. As shown in FIG. 5 and FIG. 6, for the video push-stream scenario with high frame rate and high resolution in the conference push-stream, the special effect processing modes can be switched automatically. The CPU consumption is effectively reduced under the condition that the holding effect is unchanged, and the low-power-consumption operation of the office environment is ensured. The main technical means include:
(1)The special effect processing link is modified: for the original video data to be processed, the frame pre-detection module is added, the target special effect processing mode of the current frame of the original video data is determined. For the effect of processing the CPU, such as the skin smoothing and background replacement, the CPU is used for processing; and for the effect applicable to GPU processing, such as the 3D effect, the GPU is used for processing.
(2)For the CPU mode, the special effect processing of the YUV format data is adapted. For example, the video background is blurred, and the facial smoothing can only process the Y component, or process the YUV, which reduces the CPU overhead.
(3)For the CPU mode, the special effect processing of an image (matrix) on the CPU side is accelerated by using a parallel instruction set (MIPS), so that the CPU side CPU processing overhead is effectively reduced.

For example, the special effect processing link of the method of multimedia data transmission may include:

### (1) Mode Decision

Determination of the special effect processing mode is made based on currently enabled special effect items. If all options support CPU mode, the CPU mode processing will be entered; otherwise, the GPU mode processing will be entered. Considering that the special effect item to be processed for each frame may be added or deleted, the special effect processing mode needs to be re-determined when the special effect changes. It is to be understood that whether the special effect supports the CPU mode depends on the implementation of the special effect.

### (2)GPU Processing Mode

YUV three components are copied from a CPU to a GPU, and converted into an RGBA texture on the GPU. Processing and superposing of special effects are performed sequentially according to the hierarchical relationship of the special effect items, and a new RGBA texture is output. The RGBA texture is converted into YUV three textures, and copied from the GPU to the CPU.

### (3)CPU Processing Mode

The special effect is processed sequentially according to the hierarchical relationship of the special effect items, the input and the output reuse a YUV memory block (processed in place), and the special effect item realizes the CPU side processing of the YUV component according to the definition of the special effect item. The processing speed of the parallel instruction set acceleration component may be selected.

In this embodiment of the present disclosure, the rendering link structure includes: a rendering effect corresponding to a rendering node, where the GPU node (GPUNode) may implement a GPU rendering mode, and the CPU node (CPUNode) may implement a CPU rendering mode, where the GPUNode is a mandatory option, and the CPUNode is an optional option. The necessary condition implemented by the CPUNode is that the rendering performance of the CPU Node is better than the rendering performance of the GPU node. The GPUNode and the CPUNode are in a one-to-one correspondence, the rendering visual effects achieved by the GPU node and the CPU node are consistent, and the flicker problem caused by the effect movement during mode switching is avoided. The rendering link is constructed according to the rendering sequential relationship of the rendering node in the conference, and the synchronous update is maintained in the node addition and deletion change. When the image is rendered, the corresponding rendering link is entered according to the mode, and the output of the previous node is used as the input of the next node until the final image is output.

For example, in a video conference, video data is usually collect through a camera, and the collected data is decoded and processed locally, and then is pushed to the server through the encoding module, and meanwhile, the participant can pull the video data of other participants to be displayed locally, resulting in a virtual conference. The terminal device generally collects data in a YUV format through a camera, and in a push-stream mode, the data exchange is generally transmitted using encoding in a YUV format, in order to save network bandwidth.

Modern video conference software usually has special effect processing functions before data transmission, such as portrait beautification, video background replacement, face virtual masks (3D effects), and the like. In order to balance a performance-quality effect in a conference scenario, video image processing and transmission may be performed by setting a resolution and a frame rate of a video image.

The construction design of CPU rendering link and the GPU rendering link as well as the rendering principle of the special effect rendering link proposed by the present solution are, for example, suitable for the adaptive balancing scheme of special effect processing effects and special effect processing performance required by videos of high frame rate and high resolution in a video conference scenario, and are suitable for high-efficiency special effect processing application under the video pushing stream.

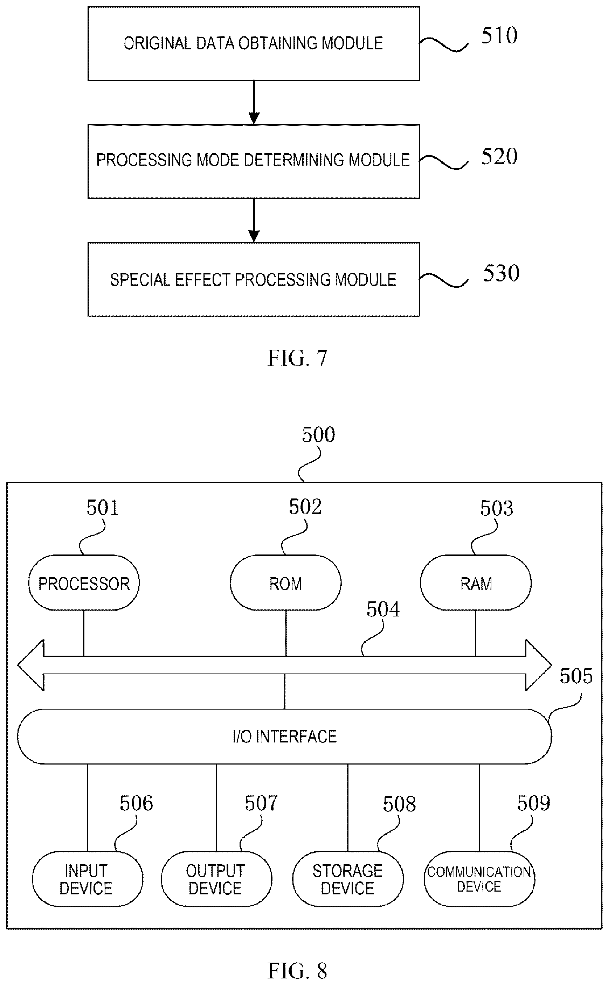

FIG. 7 is a schematic structural diagram of an apparatus for multimedia data transmission according to an embodiment of the present disclosure. As shown, the apparatus includes an original data obtaining module 510, a processing mode determining module 520 and a special effect processing module 530.

The original data obtaining module 510 is configured to in response to a data transmission request, obtain original multimedia data to be transmitted; the processing mode determining module 520 is configured to determinein response to a preset special effect processing condition being met, a target special effect processing mode of the original multimedia data based on a preset special effect processing mode, wherein the preset special effect processing mode at least comprises a central processing unit mode and a graphics processor processing mode; and the special effect processing module 530 is configured to perform a special effect processing on the original multimedia data based on the special effect processing mode to obtain target transmission multimedia data.

According to the technical scheme of the embodiment of the disclosure, the original multimedia data to be transmitted is obtained in response to the data transmission request, and the original multimedia data can be automatically obtained before the data is transmitted. In a case that a preset special effect processing condition is met, a target special effect processing mode of the original multimedia data is determined according to a preset special effect processing mode, where the preset special effect processing mode includes at least a central processing unit mode and a graphics processor processing mode; the special effect processing may be performed on the original multimedia data in a proper mode selected from the central processing unit mode and the graphics processor processing mode. Compared with a manner of using a graphics processor to perform special effect processing, an adaptability of the special effect processing mode to the scene requirement is higher. For example, the special effect processing is performed on the original multimedia data based on the target special effect processing mode to obtain the target transmission multimedia data, so that the technical problem of heating or fan rotation caused by high CPU performance consumption in the related art is solved, the data transmission efficiency is improved, the performance consumption of the processor is effectively reduced, the technical effect of diversity of the special effect processing mode is increased, and the user experience is improved.

Optionally, the processing mode determining module 520 includes a target special effect processing mode determining unit. The target special effect processing mode determining unit is configured to determine the target special effect processing mode of the original multimedia data based on a special effect type to which the target special effect corresponding to the original multimedia data belongs and a pre-established correspondance between the preset special effect processing mode and the special effect type.

Optionally, before the target special effect processing mode determining unit, the apparauts further includes: a processing performance evaluation result determining subunit and a correspondance building subunit.

The processing performance evaluation result determining subunit is configured to perform a special effect processing test on a special effect of each special effect type through a central processing unit and a graphics processor, respectively, and determining a processing performance evaluation result of the special effect of each special effect type by the central processing unit and the graphics processor based on a predetermined performance evaluation index; and the correspondence establishing subunit is configured to construct a correspondence between each special effect type and the preset special effect processing mode based on the processing performance evaluation result of the special effect of each special effect type determined by the central processor and the graphics processor.

Optionally, the original multimedia data includes original video data; and the original data obtaining module 510 is configured to:
in response to a conference start triggering operation for a video conference, collect the original video data to be transmitted in a first encoding format based on a video acquisition device, wherein the first coding format at least comprises a pixel format represented by a luma parameter and a chroma parameter separately..

Optionally, the special effect processing module 530 includes: an original video data transmission unit, a first video data processing unit, and a target transmission multimedia data determining unit.

The original video data transmission unit is configured to in response to the target special effect processing mode being the graphics processor processing mode, transmit the original video data in the first encoding format to the graphics processor through the central processing unit;
a first video data processing unit, configured to convert, via the graphics processor, the original video data from the first encoding format to a second encoding format, and performing the special effect processing on the original video data in the second encoding format to obtain special effect video data in the second encoding format; and
the target transmission multimedia data determining unit is configured to convert, via the graphics processor, the special effect video data from the second encoding format to the first encoding format to obtain the target transmission multimedia data.

Optionally, after the target transmission multimedia data determining unit, the apparatus further includes: a target transmission multimedia data pushing unit.

The target transmission multimedia data pushing unit is configured to:
transmit the target transmission multimedia data to the central processing unit, and push the target transmission multimedia data to a target server via the central processing unit.

Optionally, the special effect processing module 530 includes a second video data processing unit.

The original video data processing unit is configured to, in response to the target special effect processing mode being the central processing unit mode, perform, via the central processing unit, the special effect processing on the original video data in the first encoding format.

Optionally, the second video data processing unit is configured to:
determine, for each frame of image to be processed in the original video data, a target processing parameter from a luma parameter and a chroma parameter of the image to be processed based on the special effect type of the target special effect corresponding to the original video data; and
perform the special effect processing on the target processing parameter to obtain the target transmission multimedia data.

Optionally, the second video data processing unit is configured to:
for each frame of image to be processed in the original video data, performing the special effect processing, in the central processing unit, on each pixel of the image to be processed by using a parallel instruction set.

Optionally, the preset special effect processing condition includes at least one of the following conditions:
detecting a flag bit of a preset special effect;
detecting that the data transmission request carries a special effect processing request for the original multimedia data; and
receiving a special effect triggering operation for a preset special effect processing control, wherein the special effect triggering operation comprises at least one of a special effect enabling operation, a special effect deleting operation, and a special effect adjusting operation.

The apparatus for multimedia data transmission provided in the embodiments of the present disclosure may perform the method of multimedia data transmission provided by any embodiment of the present disclosure, and has functional modules and effects corresponding to the execution method.

It should be noted that the units and modules included in the foregoing apparatus are only divided according to the function logic, but are not limited to the foregoing division, as long as the corresponding functions can be implemented; in addition, names of the function units are merely for ease of distinguishing, and are not intended to limit the protection scope of the embodiments of the present disclosure.

FIG. 8 is a schematic structural diagram of an electronic device according to an embodiment of the present disclosure. Referring to FIG. 8, FIG. 8 is a schematic structural diagram of an electronic device (such as the terminal device or server in FIG. 8) suitable for implementing the embodiments of the present disclosure. The terminal device in the embodiments of the present disclosure may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 8 is merely an example, and should not impose any limitation on the functions and scope of use of the embodiments of the present disclosure.

As shown in FIG. 8, the electronic device 500 may include a processor (for example, a central processing unit, a graphics processor, etc. ) 501, and the processor 501 may perform various appropriate actions and processing according to a program stored in a read-only memory (ROM) 502 or a program loaded into a random access memory (RAM) 503 from a storage device 508. In the RAM 503, various programs and data required by the operation of the electronic device 500 are also stored. The processor 501, the ROM 502, and the RAM 503 are connected to each other through a bus 504. Input / output (I/O) interface 505 is also connected to bus 504.

Generally, the following devices may be connected to the I/O interface 505: an input device 506 including, for example, a touch screen, a touch pad, a keyboard, a mouse, a camera, a microphone, an accelerometer, a gyroscope, etc. ; an output device 507 including, for example, a liquid crystal display (LCD), a speaker, a vibrator, etc. ; a storage device 508 including, for example, a magnetic tape, a hard disk, etc. ; and a communication device 509. The communication device 509 may allow the electronic device 500 to communicate wirelessly or wired with other devices to exchange data. While FIG. 8 shows an electronic device 500 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product comprising a computer program embodied on a non-transitory computer readable medium, the computer program comprising program code for performing the method shown in the flowchart. In such embodiments, the computer program may be downloaded and installed from the network through the communication device 509, or installed from the storage device 508, or from the ROM 502. When the computer program is executed by the processor 501, the foregoing functions defined in the method of the embodiments of the present disclosure are performed.

The electronic device provided by the embodiments of the present disclosure and the method of multimedia data transmission provided in the above embodiments belong to the same concept, technical details not described in detail in this embodiment may refer to the foregoing embodiments, and this embodiment has the same effect as the foregoing embodiments.

An embodiment of the present disclosure provides a computer-readable storage medium having a computer program stored thereon, where the program, when executed by a processor, implements the method of multimedia data transmission provided in the foregoing embodiments.

It should be noted that the computer-readable storage medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. Exemplary examples of the computer-readable storage medium may include, but are not limited to, an electrical connection having at least one wire, a portable computer diskette, a hard disk, a random access memory (RAM), a read-only memory (ROM), an erasable programmable read-only memory (EPROM), a flash memory, an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable storage medium other than a computer readable storage medium that may send, propagate, or transmit a program for use by or in connection with an instruction execution system, apparatus, or device. The program code embodied on the computer-readable storage medium may be transmitted by any suitable medium, including but not limited to: wires, optical cables, Radio Frequency (RF), and the like, or any suitable combination thereof.

In some implementations, the client, server may communicate using any currently known or future developed network protocol, such as Hypertext Transfer Protocol (HTTP), and may be interconnected with any form or medium of digital data communication (e.g., a communication network). Examples of communication networks include Local Area Networks (LANs), Wide Area Networks (WANs), Internet networks (e.g., the Internet), and peer-to-peer networks (e.g., ad hoc peer-to-peer networks), as well as any currently known or future developed networks.

The computer-readable storage medium described above may be included in the foregoing electronic device; or may exist alone or in the electronic device.

The computer readable storage medium carries at least one program, and when the at least one program is executed by the electronic device, the electronic device is caused to: obtain original multimedia data to be transmitted in response to a data transmission request; in response to a preset special effect processing condition being met, determine a target special effect processing mode of the original multimedia data according to a preset special effect processing mode, wherein the preset special effect processing mode at least comprises a central processing unit mode and a graphics processor processing mode; and perform special effect processing on the original multimedia data based on the target special effect processing mode to obtain target transmission multimedia data.

Computer program code for performing the operations of the present disclosure may be written in at least one programming language, including, but not limited to, an object-oriented programming language such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes at least one executable instruction for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and flowcharts, as well as combinations of blocks in the block diagrams and flowcharts, may be implemented with dedicated hardware-based system that perform specified functions or operations, or may be implemented in a combination of dedicated hardware and computer instructions.

The units involved in the embodiments of the present disclosure may be implemented in software, or may be implemented in hardware. The name of the unit does not constitute a limitation on the unit itself, for example, the first obtaining unit may further be described as "unit for obtaining at least two Internet Protocol addresses".

The functions described above may be performed, at least in part, by at least one hardware logic component. For example, without limitation, the exemplary types of hardware logic components that may be used include: a Field Programmable Gate Array (FPGA), an Application Specific Integrated Circuit (ASIC), an Application Specific Standard (ASSP), a System on Chip (SOC), a Complex Programmable Logic Device (CPLD), or the like.

In the context of the present disclosure, a machine-readable storage medium may be a tangible medium that may contain or store a program for use by or in connection with an instruction execution system, apparatus, or device. The machine-readable storage medium may be a machine-readable signal medium or a machine-readable storage medium. The machine-readable storage medium may include, but is not limited to, electronic, magnetic, optical, electromagnetic, infrared, or semiconductor systems, devices, or devices, or any suitable combination of the foregoing. Examples of machine-readable storage media include an electrical connection based on at least one line, a portable computer disk, a hard disk, a random access memory (RAM), a read-only memory (ROM), an erasable programmable read-only memory (EPROM), a flash memory, an optical fiber, a portable compact disk read-only memory (CD-ROM), an optical storage device, a magnetic storage device, or any suitable combination of the foregoing.

According to one or more embodiments of the present disclosure, [Example 1] provides a method of multimedia data transmission, including:
in response to a data transmission request, obtaining original multimedia data to be transmitted;
in response to a preset special effect processing condition being met, determining a target special effect processing mode of the original multimedia data based on a preset special effect processing mode, wherein the preset special effect processing mode at least comprises a central processing unit mode and a graphics processor processing mode; and
performing a special effect processing on the original multimedia data based on the target special effect processing mode to obtain target transmission multimedia data.

According to one or more embodiments of the present disclosure, [Example 2] provides a method of Example 1, further comprising:
determining the target special effect processing mode of the original multimedia data based on a special effect type to which the target special effect corresponding to the original multimedia data belongs and a pre-established correspondance between the preset special effect processing mode and the special effect type.

According to one or more embodiments of the present disclosure, [Example 3] provides the method of Example 2, further comprising:
performing a special effect processing test on a special effect of each special effect type through a central processing unit and a graphics processor, respectively, and determining a processing performance evaluation result of the special effect of each special effect type by the central processing unit and the graphics processor based on a predetermined performance evaluation index; and
constructing a correspondence between each special effect type and the preset special effect processing mode based on the processing performance evaluation result of the special effect of each special effect type determined by the central processor and the graphics processor.

According to one or more embodiments of the present disclosure, [Example 4] provides the method of Example 1, further comprising:
in response to a conference start triggering operation for a video conference, collecting the original video data to be transmitted in a first encoding format based on a video acquisition device, wherein the first coding format at least comprises a pixel format represented by a luma parameter and a chroma parameter separately.

According to one or more embodiments of the present disclosure, [Example 5] provides the method of Example 4, further comprising:
in response to the target special effect processing mode being the graphics processor processing mode, transmitting the original video data in the first encoding format to the graphics processor through the central processing unit;
converting, via the graphics processor, the original video data from the first encoding format to a second encoding format, and performing the special effect processing on the original video data in the second encoding format to obtain special effect video data in the second encoding format; and
converting, via the graphics processor, the special effect video data from the second encoding format to the first encoding format to obtain the target transmission multimedia data.

According to one or more embodiments of the present disclosure, [Example 6] provides the method of Example 5, further comprising:
transmitting the target transmission multimedia data to the central processing unit, and pushing the target transmission multimedia data to a target server via the central processing unit.

According to one or more embodiments of the present disclosure, [Example 7] provides the method of Example 4, further comprising:
in response to the target special effect processing mode being the central processing unit mode, performing, via the central processing unit, the special effect processing on the original video data in the first encoding format.

According to one or more embodiments of the present disclosure, [Example 8] provides the method of Example 7, further comprising:
determining, for each frame of image to be processed in the original video data, a target processing parameter from a luma parameter and a chroma parameter of the image to be processed based on the special effect type of the target special effect corresponding to the original video data; and
performing the special effect processing on the target processing parameter to obtain the target transmission multimedia data.

According to one or more embodiments of the present disclosure, [Example 9] provides the method of Example 7, further comprising:
for each frame of image to be processed in the original video data, performing the special effect processing, in the central processing unit, on each pixel of the image to be processed by using a parallel instruction set.

According to one or more embodiments of the present disclosure, [Example 10] provides the method of Example 1, further comprising at least one of the following conditions:
detecting a flag bit of a preset special effect;
detecting that the data transmission request carries a special effect processing request for the original multimedia data; and
receiving a special effect triggering operation for a preset special effect processing control, wherein the special effect triggering operation comprises at least one of a special effect enabling operation, a special effect deleting operation, and a special effect adjusting operation.

According to one or more embodiments of the present disclosure, [Example 11] provides an apparatus for multimedia data transmission, including:
an original data obtaining module configured to in response to a data transmission request, obtain original multimedia data to be transmitted;
a processing mode determining module configured to determine, in response to a preset special effect processing condition being met, a target special effect processing mode of the original multimedia data based on a preset special effect processing mode, wherein the preset special effect processing mode at least comprises a central processing unit mode and a graphics processor processing mode; and
a special effect processing module is configured to perform a special effect processing on the original multimedia data based on the special effect processing mode to obtain target transmission multimedia data.

According to one or more embodiments of the present disclosure, [Example 12] provides an electronic device for multimedia data transmission, comprising:
at least one processor;
a storage device configured to store at least one program,
the at least one program, when executed by the at least one processor, implementing the method of multimedia data transmission of any of Examples 1-10

According to one or more embodiments of the present disclosure, [Example 13] provides a data transmission storage medium, comprising:
computer-executable instructions, when executed by a computer processor, performing the method of multimedia data transmission according to any of Examples 1 to 10.

## Claims

1. A method of multimedia data transmission, comprising:
in response to a data transmission request, obtaining original multimedia data to be transmitted;
in response to a preset special effect processing condition being met, determining a target special effect processing mode of the original multimedia data based on a preset special effect processing mode, wherein the preset special effect processing mode at least comprises a central processing unit mode and a graphics processor processing mode; and
performing a special effect processing on the original multimedia data based on the target special effect processing mode to obtain target transmission multimedia data.

2. The method of multimedia data transmission of claim 1, wherein the determining a target special effect processing mode of the original multimedia data based on a preset special effect processing mode comprises:
determining the target special effect processing mode of the original multimedia data based on a special effect type to which the target special effect corresponding to the original multimedia data belongs and a pre-established correspondance between the preset special effect processing mode and the special effect type.

3. The method of multimedia data transmission of claim 2, wherein before the determining the target special effect processing mode of the original multimedia data based on a special effect type to which the target special effect corresponding to the original multimedia data belongs and a pre-established correspondance between the preset special effect processing mode and the special effect type, the method further comprises:
performing a special effect processing test on a special effect of each special effect type through a central processing unit and a graphics processor, respectively, and determining a processing performance evaluation result of the special effect of each special effect type by the central processing unit and the graphics processor based on a predetermined performance evaluation index; and
constructing a correspondence between each special effect type and the preset special effect processing mode based on the processing performance evaluation result of the special effect of each special effect type determined by the central processor and the graphics processor.

4. The method of multimedia data transmission of claim 1, wherein the original multimedia data comprises original video data; and the in response to a data transmission request, obtaining original multimedia data to be transmitted comprises:
in response to a conference start triggering operation for a video conference, collecting the original video data to be transmitted in a first encoding format based on a video acquisition device, wherein the first coding format at least comprises a pixel format represented by a luma parameter and a chroma parameter separately.

5. The method of multimedia data transmission of claim 4, wherein the performing a special effect processing on the original multimedia data based on the target special effect processing mode comprises:
in response to the target special effect processing mode being the graphics processor processing mode, transmitting the original video data in the first encoding format to the graphics processor through the central processing unit;
converting, via the graphics processor, the original video data from the first encoding format to a second encoding format, and performing the special effect processing on the original video data in the second encoding format to obtain special effect video data in the second encoding format; and
converting, via the graphics processor, the special effect video data from the second encoding format to the first encoding format to obtain the target transmission multimedia data.

6. The method of multimedia data transmission of claim 5, wherein after the obtaining the target transmission multimedia data, the method further comprises:
transmitting the target transmission multimedia data to the central processing unit, and pushing the target transmission multimedia data to a target server via the central processing unit.

7. The method of multimedia data transmission of claim 4, wherein the performing special effect processing on the original multimedia data based on the target special effect processing mode comprises:
in response to the target special effect processing mode being the central processing unit mode, performing, via the central processing unit, the special effect processing on the original video data in the first encoding format.

8. The method of multimedia data transmission of claim 7, wherein the performing, via the central processing unit, the special effect processing on the original video data in the first encoding format comprises:
determining, for each frame of image to be processed in the original video data, a target processing parameter from a luma parameter and a chroma parameter of the image to be processed based on the special effect type of the target special effect corresponding to the original video data; and
performing the special effect processing on the target processing parameter to obtain the target transmission multimedia data.

9. The method of multimedia data transmission of claim 7, wherein the performing, via the central processing unit, the special effect processing on the original video data in the first encoding format comprises:
for each frame of image to be processed in the original video data, performing the special effect processing, in the central processing unit, on each pixel of the image to be processed by using a parallel instruction set.

10. The method of multimedia data transmission of claim 1, wherein the preset special effect processing condition comprises at least one of the following conditions:
detecting a flag bit of a preset special effect;
detecting that the data transmission request carries a special effect processing request for the original multimedia data; and
receiving a special effect triggering operation for a preset special effect processing control, wherein the special effect triggering operation comprises at least one of a special effect enabling operation, a special effect deleting operation, and a special effect adjusting operation.

11. A apparatus for multimedia data transmission, comprising:
an original data obtaining module (510) configured to in response to a data transmission request, obtain original multimedia data to be transmitted;
a processing mode determining module (520) configured to determine, in response to a preset special effect processing condition being met, a target special effect processing mode of the original multimedia data based on a preset special effect processing mode, wherein the preset special effect processing mode at least comprises a central processing unit mode and a graphics processor processing mode; and
a special effect processing module (530) is configured to perform a special effect processing on the original multimedia data based on the special effect processing mode to obtain target transmission multimedia data.

12. An electronic device, comprising:
at least one processor; and
a storage device configured to store at least one program,
the at least one program, when executed by the at least one processor, implementing the method of multimedia data transmission of any of claims 1-10.

13. A storage medium comprising computer executable instructions which, when executed by a computer processor, perform the method of multimedia data transmission of any of claims 1-10.
